# EUROPÄISCHE PATENTSCHRIFT

(11) **EP 1 600 665 B1**
(45) Veröffentlichungstag und Bekanntmachung des Hinweises auf die Patenterteilung: **20.12.2006**
(21) Anmeldenummer: 04012214.5
(22) Anmeldetag: 24.05.2004
(51) Int. Cl.: F16H 25/20, H02K 7/06

(54) **Elektromotorischer Verstellantrieb**
Electromotive adjustable drive
Mécanisme de réglage à moteur électrique

(43) Veröffentlichungstag der Anmeldung: 30.11.2005
(73) Patentinhaber: Canonica, Hans-Peter, CH-6652 Tegna (CH)
(72) Erfinder: Canonica, Hans-Peter, CH-6652 Tegna (CH)
(74) Vertreter: Jakelski, Joachim

(56) Entgegenhaltungen:
- EP-A- 1 089 019
- DE-A- 3 427 482
- US-A1- 2004 036 364
- ANONYMOUS: "10mm ISO metric thread " INTERNET ARTICLE, [Online] XP002298404 Gefunden im Internet: <URL:http://www.nookindustries.com/pdf/Noo k_53.pdf> [gefunden am 2004-09-28]
- ANONYMOUS: "12mm ISO metric thread " INTERNET ARTICLE, [Online] XP002298405 Gefunden im Internet: <URL:http://www.nookindustries.com/pdf/Noo k_56.pdf> [gefunden am 2004-09-28]
- ANONYMOUS: "Standard cataloged metric trapezoidal & speedy lead screw assemblies" INTERNET ARTICLE, [Online] 2003, XP002298406 Gefunden im Internet: <URL:http://www.nookindustries.com/acme/Ac meMetricAvailability.cfm> [gefunden am 2004-09-28]

## Beschreibung

### Stand der Technik

Die Erfindung geht aus von einem elektromotorischen Verstellantrieb nach der Gattung des unabhängigen Anspruchs.

Aus der DE-A-102 18 569 ist ein elektromotorischer Verstellantrieb bekannt geworden, dessen Verstellelement als Gewindespindel ausgebildet ist, die in einer Spindelmutter geführt und gelagert ist. Die Spindelmutter ist am Rotor des Elektromotors koaxial angeordnet und befestigt. Durch das Drehen der Spindelmutter zusammen mit dem Rotor wird die gegenüber der Spindelmutter verdrehfest gelagerte Gewindespindel in axialer Richtung des Elektromotors hin- und herbewegt.

Aus der DE-A-195 12 349 ist ein elektromotorischer Verstellantrieb bekannt geworden, dessen Verstellelement ebenfalls als Gewindespindel ausgebildet ist, die mit einem koaxial zur Gewindespindel angeordneten Kolben zusammenwirkt, der ein hydraulisch beaufschlagtes Volumen begrenzt. Die Gewindespindel, deren Durchmesser geringer als der des Kolbens ist, wird von einer Spindelmutter gelagert und mittels des Kolbens geführt. Die Spindelmutter ist über eine Kupplung mit einer Hohlwelle des Elektromotors verbunden.

Aus der DE-U-299 19 701 ist ein elektromotorischer Verstellantrieb bekannt geworden, bei dem der Rotor eines Elektromotors über eine Hohlwelle die Mutter eines Kugelgewindetriebes dreht. Die feststehende Gewindespindel des Kugelgewindetriebes ist mit einer verdreh- und spielfrei in Führungen gelagerten Hülse verbunden, die den Elektromotor außen weitgehend umschließt. Der elektromotorische Verstellantrieb enthält ein Messsystem zum Erfassen der Drehung der Hohlwelle des Elektromotors.

Aus der EP-A-612 651 ist ein elektromotorischer Verstellantrieb bekannt geworden, der zum Antrieb einer Lenkung eines Kraftfahrzeugs vorgesehen ist. In einer Hohlwelle eines Elektromotors ist eine Spindelmutter konzentrisch eingeklebt, die eine Verstellstange der Lenkung mit einem Spindelteil übergreift und über Kugelrollen axial verschiebbar antreibt. Die Hohlwelle ist axial beidseitig über Schrägkugellager im Gehäuse des Verstellantriebs axial vorgespannt gelagert.

Die DE-A-34 27 482, die der nächstliegender Stand der Technik bildet, offenbart eine elektrisch angetriebene Bedienungsvorrichtung für ein bewegliches Element, bei der eine Schraube in axialer Richtung die gesamte, eine Hohlwelle aufweisende Antriebsvorrichtung durchläuft. Die flexibel ausgebildete Schraube ist in Führungshülsen gelagert.

Der Erfindung liegt die Aufgabe zugrunde, einen elektromotorischen Verstellantrieb anzugeben, der eine hohe Laufruhe und kompakte Abmessungen aufweist sowie preiswert realisierbar ist.

Die Aufgabe wird durch die in den unabhängigen Ansprüchen jeweils angegebenen Merkmale gelöst.

### Vorteile der Erfindung

Der erfindungsgemäße elektromotorische Verstellantrieb geht davon aus, dass ein Rotor eines Elektromotors kraftschlüssig mit einer Hohlwelle und mit einem Gewindeteil verbunden ist, das in eine Spindel zur Umsetzung einer Rotationsbewegung des Rotors in eine hin- und hergehende Bewegung der Spindel eingreift.
Gemäß einer ersten Ausführungsform der Erfindung ist vorgesehen, dass die Hohlwelle wenigstens näherungsweise einen konstanten Innendurchmesser aufweist und dass der Hohlwellen-Innendurchmesser und der Außendurchmesser der Spindel aufeinander abgestimmt sind, derart, dass die Spindel in der Hohlwelle geführt und gelagert ist.

Mit diesen Maßnahmen wird zunächst ein äußerst kompakter Aufbau des elektromotorischen Verstellantriebs erreicht. Als Führungs- und Lagerteil der Spindel dient die Hohlwelle des Elektromotors. Zusätzliche Komponenten sind nicht erforderlich.

Zur Umsetzung der Rotationsbewegung in die Verstellbewegung der Spindel ist nur das Gewindeteil vorgesehen, sodass eine hohe Laufruhe erreicht wird.

Die geringe Anzahl von Komponenten erhöht einerseits die Zuverlässigkeit des Verstellantriebs und ermöglicht andererseits die kostengünstige Realisierung, die sich insbesondere in der Serienproduktion des erfindungsgemäßen elektromotorischen Verstellantriebs positiv bemerkbar macht.

Gemäß einer selbständigen anderen Ausführungsform der Erfindung, die gegebenenfalls die erste Ausführungsform der Erfindung weiterbildet, ist vorgesehen, dass die Spindel-Steigung und der Spindel-Durchmesser aufeinander abgestimmt sind, wobei die Spindel-Steigung in einem Bereich von 0,15 x Spindel-Durchmesser bis 0,30 x Spindel-Durchmesser liegt.

Die gezielte Abstimmung der Spindel-Steigung und des Spindel-Durchmessers aufeinander führen zu einem Optimum zwischen der Verstellkraft des elektromotorischen Verstellantriebs und der statischen sowie dynamischen Selbsthemmung. Der erfindungsgemäße elektromotorische Verstellantrieb kann damit präzise an die Aufgabenstellung angepasst werden.

Vorteilhafte Weiterbildungen und Ausgestaltungen des erfindungsgemäßen elektromotorischen Verstellantriebs ergeben sich aus abhängigen Ansprüchen.

Eine erste Ausgestaltung sieht vor, dass das Gewindeteil als Spindelmutter ausgebildet ist, die im Bereich einer Stirnseite des Elektromotors angeordnet ist. Gewindemuttern sind handelsübliche, äußerst preiswert erhältliche Teile. Die Anordnung im Bereich einer Stirnseite des Elektromotors ermöglicht eine einfache konstruktive Realisierung, bei der ein Eingriff in den Elektromotor nicht erforderlich ist.

Eine andere Ausgestaltung sieht vor, dass das Gewindeteil in die Hohlwelle integriert ist. Die Hohlwelle kann bei dieser Ausgestaltung auf ihrer Innenseite zumindest auf einem Teil der axialen Ausdehnung mit dem in die Spindel eingreifenden Gewinde versehen werden. Ein separates Gewindeteil kann somit entfallen.

Eine andere Ausgestaltung sieht vor, dass der Spindel-Durchmesser in einem Bereich von 5 - 15 Millimetern liegt. Vorzugsweise ist der Spindel-Durchmesser auf wenigstens näherungsweise 10 mm festgelegt. Mit der speziellen Bemessung des Spindel-Durchmessers kann eine gegebene Aufgabenstellung optimal hinsichtlich der Verstellkraft, dem Drehmoment des Elektromotors und hinsichtlich der Kosten gelöst werden.

Eine andere Ausgestaltung sieht vor, dass die Spindel-Steigung in einem Bereich von 2 - 3 mm liegt. Vorzugsweise ist die Spindel-Steigung wenigstens näherungsweise auf 2,2 mm festgelegt. Mit der speziellen Bemessung der Spindel-Steigung kann ebenfalls eine gegebene Aufgabenstellung optimal gelöst werden.

Eine andere Ausgestaltung sieht vor, dass die Spindel ein vorzugsweise eingängiges Trapezgewinde aufweist.

Besonders vorteilhaft ist die Kombination der zuletzt beschriebenen Ausgestaltungen. Insbesondere die Kombination aus dem vorgegebenen Spindel-Durchmesser und der vorgegebenen Spindel-Steigung hat in einer speziellen Anwendung des erfindungsgemäßen elektromotorischen Verstellantriebs zu optimalen Ergebnissen geführt.

Eine andere Ausgestaltung sieht vor, dass die Spindel aus Stahl und die Spindelmutter aus Kunststoff hergestellt sind. Allgemein spielt die Materialauswahl eine Rolle bei dem optimalen Zusammenspiel zwischen dem Spindel-Durchmesser und der Spindel-Steigung.

Eine Ausgestaltung sieht den Einsatz wenigstens eines Dämpfungselements vor, das im Bereich der Hohlwelle zur Dämpfung von Geräuschen der sich drehenden Spindel vorgesehen ist. Das wenigstens eine Dämpfungselement kann als Beschichtung der Innenseite der Hohlwelle oder als Einsatz ausgebildet sein. In einer einfachen Ausgestaltung ist wenigstens ein Dämpfungselement auf der gegenüberliegenden Seite des Elektromotors bezogen auf das Gewindeteil vorgesehen.

Eine Weiterbildung sieht vor, dass ein Positions- und/oder Drehrichtungs- und/oder Drehzahlsensor vorgesehen ist, der vorzugsweise im Elektromotor angeordnet ist. Der Sensor ermöglicht die Positions- und/oder die Drehzahl- und/oder zumindest die Drehrichtungs-Rückmeldung der Spindel an ein Steuergerät. Die vom Sensor bereitgestellten Signale können zur Synchronisation von mehreren Antrieben verwendet werden.

Eine andere Weiterbildung sieht vor, dass das Gewindeteil über ein Getriebe mit dem Rotor des Elektromotors verbindbar ist. Das Getriebe ermöglicht eine Anpassung der Motordrehzahl an eine vorgegebene Verstellgeschwindigkeit der Spindel. Das Getriebe ermöglicht weiterhin eine Anpassung des Elektromotor-Drehmoments an die aufzubringende Verstellkraft.

Eine Ausgestaltung betrifft den Elektromotor, der vorzugsweise als Kollektormotor, vorzugsweise Gleichstrom-Kollektormotor realisiert ist. Kollektormotoren sind aufgrund der Massenfertigung äußerst preiswert erhältlich. Insbesondere Gleichstrom-Kollektormotoren mit Permanentmagnet-Erregung sind mit einfachen Schaltungsmitteln ansteuerbar.

Eine Ausgestaltung des Elektromotors sieht vor, dass das Gehäuse zumindest eine Abflachung aufweist. Ein derart ausgestalteter Elektromotor kann besonders einfach montiert werden, wobei spezielle Maßnahmen zum Verhindern des Verdrehens des Elektromotor-Gehäuses entfallen können.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

### Zeichnung

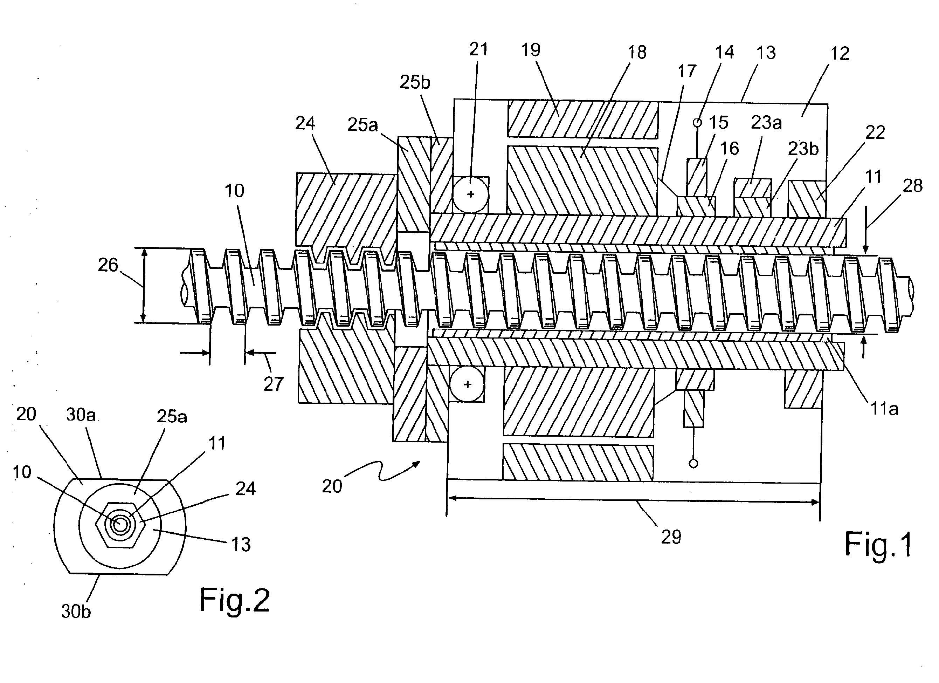

Figur 1 zeigt ein vereinfachtes Schnittbild durch einen erfindungsgemäßen elektromotorischen Verstellantrieb und Figur 2 zeigt eine Draufsicht auf eine Stirnseite des elektromotorischen Verstellantriebs.

### Beschreibung der Ausführungsbeispiele

Figur 1 zeigt einen elektromotorischen Verstellantrieb, der als Verstellelement eine Spindel 10 aufweist, die in einer Hohlwelle 11 eines Elektromotors 12 geführt und gelagert ist. Der Hohlwelle 11 ist wenigstens ein Dämpfungselement 11a zugeordnet.

Der in einem Gehäuse 13 untergebrachte Elektromotor 12 ist im gezeigten Ausführungsbeispiel als Kollektormotor realisiert. Der Betriebsstrom des Elektromotors 12 gelangt über einen Bürsten-Anschluss 14, eine Bürste 15, einen Kollektor 16 und über einen Wicklungs-Anschluss 17 zu einem Wicklungspaket 18, das kraftschlüssig mit der Hohlwelle 11 verbunden ist. Im Folgenden wird das Wicklungspaket als Rotor 18 des Elektromotors 12 bezeichnet.

Die Erregung des Elektromotors 12 erfolgt im gezeigten Ausführungsbeispiel mit Permanentmagneten 19, die am Gehäuse 13 angeordnet sind.

Zur Lagerung der Hohlwelle 11 sind an einer Stirnseite 20 des Elektromotors 12 beispielsweise ein Kugellager 21 und am gegenüberliegenden Ende des Elektromotors 12 beispielsweise ein Sinterlager 22 vorgesehen.

Ein Sensor 23a, 23b erfasst beispielsweise die Position und/oder die Drehrichtung und/oder die Drehzahl der Hohlwelle 11 gegenüber dem Gehäuse 13. Ein erstes Teil 23a des Sensors 23a, 23b ist gegenüber der Hohlwelle 11 drehfest angeordnet, während ein zweites Teil 23b des Sensors 23a, 23b zusammen mit der Hohlwelle 11 dreht. Wenigstens ein Signal des Sensors 23a, 23b wird einem nicht näher gezeigten Steuergerät des Verstellantriebs zur Verfügung gestellt, das den Elektromotor 12 in Abhängigkeit von der Position und/oder der Drehrichtung und/oder der Drehzahl der Hohlwelle 11 ansteuern kann. Das wenigstens eine Signal des Sensors 23a, 23b kann zur Synchronisation mehrerer elektromotorischer Verstellantriebe verwendet werden. Ein Gewindeteil 24 setzt die Rotationsbewegung der Hohlwelle 11 in eine axiale Bewegung der Spindel 10 um. Die Spindel kann in Abhängigkeit von der Drehrichtung des Elektromotors 12 eine hin- und hergehende Bewegung in axialer Richtung des Elektromotors 12 ausführen. Das Gewindeteil 24 wird vorzugsweise als Spindelmutter realisiert. Muttern sind Standardbauteile, die preisgünstig erhältlich sind.

In einer alternativen Ausgestaltung kann zumindest das Gewinde des Gewindeteils 24 in der Hohlwelle 11 integriert sein. Hierzu muss die Hohlwelle 11 auf einem vorgegebenen Abschnitt eine erhöhte Materialstärke aufweisen, damit das Gewinde eingeschnitten werden kann.

Eine Anpassung der Drehzahl des Elektromotors 12 an eine vorgegebene Nenn-Verstellgeschwindigkeit der Spindel 10 kann mit einem gegebenenfalls vorhandenen Getriebe erfolgen, von dem ein erstes und zweites Getriebeteil 25a, 25b schematisch gezeigt sind. Das Getriebe 25a, 25b ermöglicht weiterhin eine Anpassung des Drehmoments des Elektromotors 12 an die vorgegebene Verstellkraft der Spindel 10. Das erste Getriebeteil 25a ist kraftschlüssig mit dem Gewindeteil 24 verbunden. Die Getriebeübersetzung findet zwischen dem ersten Getriebeteil 25a und dem mit der Hohlwelle 11 kraftschlüssig verbundenen zweiten Getriebeteil 25b statt. Die Getriebeteile 25a, 25b sind vorzugsweise außerhalb des Elektromotors 12, beispielsweise an der Stirnseite 20 angeordnet.

Die Spindel 10 weist einen Spindel-Durchmesser 26 sowie eine Spindel-Steigung 27 auf. Eine erste wesentliche Bedeutung kommt der Festlegung des Spindel-Durchmessers 26 im Hinblick auf den Hohlwellen-Innendurchmesser 28 zu. Der Hohlwellen-Innendurchmesser 28 berücksichtigt das vorzugsweise wenigstens eine vorhandene Dämpfungselement 11a. Der Spindel-Durchmesser 26 und der Hohlwellen-Innendurchmesser 28 sind derart aufeinander abzustimmen, dass die Spindel 10 in der Hohlwelle 11 oder im wenigstens einen Dämpfungselement 11a geführt und gelagert ist. Dadurch ergibt sich der Vorteil, dass ein separates Lager für die Spindel 10 entfallen kann. Bei der Festlegung der beiden Durchmesser 26, 28 kann eingeplant werden, dass die Spindel 10 die Innenfläche der Hohlwelle 11 berührt. Zu berücksichtigen sind die thermischen Ausdehnungskoeffizienten des Spindelmaterials und des Hohlwellen- oder Dämpfungselementmaterials, sodass die Leichtgängigkeit der Spindel 10 jederzeit sichergestellt ist.

Wenn der elektromotorische Antrieb in Betrieb ist, kann die Spindel 10 trotz der Führung und Lagerung in der Hohlwelle 11 in Schwingungen geraten. Die Schwingungen können mit einer Geräuschentwicklung verbunden sein, die durch ein Schlagen der Spindel 11 auf die Innenwandung der Hohlwelle 11 entsteht. Vorzugsweise ist deshalb das wenigstens eine Dämpfungselement 11a vorgesehen, das der Hohlwelle 11 zugeordnet ist. Das Dämpfungselement 11a kann beispielsweise als Beschichtung der Hohlwelle 11 realisiert werden. In einer einfachen Ausgestaltung reicht es aus, die Beschichtung lediglich an demjenigen Ende des Elektromotors 12 anzubringen, das dem Gewindeteil 24 gegenüber liegt. Im gezeigten Ausführungsbeispiel ist das Dämpfungselement 11a auf nahezu der gesamten axialen Ausdehnung der Hohlwelle 11 vorhanden. In einer Ausgestaltung kann das wenigstens eine Dämpfungselement 11a als ein Rohr realisiert werden, das in die Hohlwelle 11 eingeschoben wird. Eine andere Möglichkeit sieht den Einsatz von Federstahlelementen in der Hohlwelle 11 vor, die im eingesetzten Zustand über federnde Ausbuchtungen verfügen, die in den Hohlraum reichen und somit die Schwingungen der Spindel 10 dämpfen.

Weiterhin kommt der Ausgestaltung der Hohlwelle 11 Bedeutung zu. Die Lagerung und Führung der Spindel 10 in der Hohlwelle 11 oder dem wenigstens einen Dämpfungselement 11a wird um so stabiler, je länger die Hohlwelle 11 oder das wenigstens eine Dämpfungselement 11a die Spindel 10 umschließt. Vorzugsweise ist deshalb vorgesehen, dass die Hohlwelle 11 oder das wenigstens eine Dämpfungselement 11a sich wenigstens näherungsweise über die gesamte Motorlänge 29 erstreckt. Im gezeigten Ausführungsbeispiel ragt die Hohlwelle 28 aus dem Elektromotor 12 heraus. Die Umschließung der Spindel 10 durch die Hohlwelle 11 oder das wenigstens eine Dämpfungselement 11a ist sichergestellt, wenn die Hohlwelle 11 oder das wenigstens eine Dämpfungselement 11a wenigstens näherungsweise auf der gesamten Länge einen konstanten Hohlwellen-Innendurchmesser 28 aufweisen, wobei beim Hohlwellen-Innendurchmesser 28 das wenigstens eine Dämpfungselement 11a bereits berücksichtigt ist.

Eine wesentliche Rolle kommt der Festlegung des Spindel-Durchmessers 26 in Verbindung mit der Festlegung der Spindel-Steigung 27 zu. Besonders vorteilhaft hat sich eine Abstimmung herausgestellt, wobei die Spindel-Steigung 27 in einem Bereich von 0,15 x Spindel-Durchmesser 26 bis 0,30 x Spindel-Durchmesser 26 liegt. Mit dieser Abstimmung wird ein wirtschaftlich günstiges Verhältnis zwischen der Maximierung der Verstellkraft der Spindel 10 und der statischen sowie dynamischen Selbsthemmung des elektromotorischen Verstellantriebs erzielt. Als Einzelmaßnahme hat sich ein Spindel-Durchmesser 26 von 5 - 15 mm bewährt. In einem realisierten Ausführungsbeispiel wurde mit einem Spindel-Durchmesser 26 von wenigstens näherungsweise 10 mm die besten Ergebnisse erzielt. Ein solcher Spindel-Durchmesser ermöglicht den Einsatz von preiswerten Standard-Spindeln 10.

Als Einzelmaßnahme hat sich weiterhin eine Spindel-Steigung von 2 - 3 mm bewährt. In einem realisierten Ausführungsbeispiel wurden mit einer Spindel-Steigung von 2,2 mm und einem Spindel-Durchmesser 26 von 10 mm die besten Ergebnisse hinsichtlich Verstellkraft und Selbsthemmung erzielt.

Einen weiteren Einfluss auf die Effizienz des Verstellantriebs und insbesondere auf die Selbsthemmung hat die Auswahl des Gewindes der Spindel 10. Im gezeigten Ausführungsbeispiel ist ein vorzugsweise vorgesehenes eingängiges Trapezgewinde dargestellt, das sich bewährt hat.

Eine Bedeutung kommt der Auswahl des Materials zu. Vorzugsweise ist die Spindel 10 aus Stahl und das Gewindeteil 24 aus Kunststoff hergestellt. Die Materialkombination führt zu Unterschieden in der Rautiefe und der Materialhärte. Dies kann zu einer Verschiebung des optimalen Verhältnisses zwischen dem Spindel-Durchmesser 26 und der Spindel-Steigung 27 führen. Die bereits beschriebenen Bereiche berücksichtigen die Zusammenhänge, die sich insbesondere auf die Haftreibung zwischen der Spindel 10 und dem Gewindeteil 24 auswirken, welche die Selbsthemmung bei abgeschaltetem Elektromotor 12 bestimmen.

Anstelle des im Ausführungsbeispiel gezeigten Kollektormotors können elektronisch kommutierte Elektromotoren eingesetzt werden. Neben der Permanentmagnet-Erregung kann eine elektromagnetische Erregung vorgesehen sein, die ein Betreiben des Elektromotors 12 mit Wechselstrom ermöglicht. In einer speziellen Ausgestaltung kann als Elektromotor 12 ein Schrittmotor vorgesehen sein.

Figur 2 zeigt eine Draufsicht auf die Stirnseite 20 des Elektromotors 12. Übereinstimmende Teile in den Figuren 1 und 2 sind jeweils mit denselben Bezugszeichen versehen.

Der Darstellung in Figur 2 ist die Ausgestaltung des Gewindeteils 24 als Spindelmutter zugrunde gelegt.

Figur 2 zeigt insbesondere eine vorteilhafte Ausgestaltung des Gehäuses 13, das wenigstens eine Gehäuse-Abflachung 30a, 30b aufweisen soll. Im gezeigten Ausführungsbeispiel sind eine erste Gehäuse-Abflachung 30a und eine zweite Gehäuse-Abflachung 30b gezeigt, die symmetrisch gegenüber liegen. Durch die wenigstens eine Gehäuse-Abflachung 30a, 30b kann der Elektromotor 12 besonders einfach montiert werden, wobei spezielle Maßnahmen zum Verhindern des Verdrehens des Elektromotor-Gehäuses 13 gegenüber einem nicht näher gezeigten Teil eines Verstellantriebs entfallen können.

## Patentansprüche

1. Elektromotorischer Verstellantrieb, bei dem ein Rotor (18) eines Elektromotors (12) kraftschlüssig mit einer Hohlwelle (11) und mit einem Gewindeteil (24) verbunden ist, das in eine Spindel (10) zur Umsetzung einer Rotationsbewegung des Rotors (18) in eine hin- und hergehende Bewegung der Spindel (10) eingreift, wobei die Hohlwelle (11) wenigstens näherungsweise einen konstanten Hohlwellen-Innendurchmesser (28) aufweist und wobei der Hohlwellen-Innendurchmesser (28) und der Spindel-Durchmesser (26) aufeinander abgestimmt sind, derart, dass die Spindel (10) in der Hohlwelle (11) geführt und gelagert ist, **dadurch gekennzeichnet, dass** wenigstens ein Dämpfungselement (11a) vorgesehen ist, das auf wenigstens einem Teil der Innenwandung der Hohlwelle (11) angeordnet ist.

2. Elektromotorischer Verstellantrieb nach Anspruch 1, **dadurch gekennzeichnet, dass** die Spindel-Steigung (27) und der Spindel-Durchmesser (26) aufeinander abgestimmt sind, wobei die Spindel-Steigung (27) in einem Bereich von 0,15 x Spindel-Durchmesser (26) bis 0,30 x Spindel-Durchmesser (26) liegt.

3. Elektromotorischer Verstellantrieb nach einem der vorhergehenden Ansprüche, **dadurch gekennzeichnet, dass** das Gewindeteil (24) als Spindelmutter ausgebildet ist.

4. Elektromotorischer Verstellantrieb nach einem der Ansprüche 1 bis 2, **dadurch gekennzeichnet, dass** das Gewinde des Gewindeteils (24) in die Hohlwelle (11) integriert ist.

5. Elektromotorischer Verstellantrieb nach einem der vorhergehenden Ansprüche, **dadurch gekennzeichnet, dass** der Spindel-Durchmesser (26) in einem Bereich von 5 - 15 mm liegt, vorzugsweise auf wenigstens näherungsweise 10 mm festgelegt ist.

6. Elektromotorischer Verstellantrieb nach einem der vorhergehenden Ansprüche, **dadurch gekennzeichnet, dass** die Spindel-Steigung (27) in einem Bereich von 2 - 3 mm liegt, vorzugsweise auf wenigstens näherungsweise 2,2 mm festgelegt ist.

7. Elektromotorischer Verstellantrieb nach einem der vorhergehenden Ansprüche, **dadurch gekennzeichnet, dass** die Spindel (10) ein vorzugsweise eingängiges Trapezgewinde aufweist.

8. Elektromotorischer Verstellantrieb nach einem der vorhergehenden Ansprüche, **dadurch gekennzeichnet, dass** die Spindel (10) aus Stahl und das Gewindeteil (24) aus Kunststoff hergestellt sind.

9. Elektromotorischer Verstellantrieb nach einem der vorhergehenden Ansprüche, **dadurch gekennzeichnet, dass** ein Positions- und/oder Drehrichtungs- und/oder Drehzahlsensor (23a, 23b) vorgesehen ist, der vorzugsweise im Elektromotor (12) angeordnet ist.

10. Elektromotorischer Verstellantrieb nach einem der vorhergehenden Ansprüche, **dadurch gekennzeichnet, dass** das Gewindeteil (24) über ein Getriebe (25a, 25b) mit dem Rotor (18) des Elektromotors (12) verbindbar ist.

11. Elektromotorischer Verstellantrieb nach einem der vorhergehenden Ansprüche, **dadurch gekennzeichnet, dass** der Elektromotor (12) ein Kollektormotor ist.

12. Elektromotorischer Verstellantrieb nach einem der vorhergehenden Ansprüche, **dadurch gekennzeichnet, dass** ein Gehäuse (13) des Elektromotors (12) wenigstens eine Gehäuse-Abflachung (30a, 30b) aufweist.

## Claims

1. Electromotive adjustable drive in which a rotor (18) of an electric motor (12) is friction-locked on a hollow shaft (11) and on a threaded element (24) that engages a spindle (10) for translating a rotational movement of the rotor (18) to a reciprocating movement of the spindle (10), the hollow shaft (11) having at least an approximately constant hollow-shaft inner diameter (28) and the hollow-shaft inner diameter (28) and the spindle diameter (26) being adapted one to the other so that the spindle (10) is guided and seated in the hollow shaft (11), **characterized in that** at least one damping element (11a) is provided, which is arranged on at least one portion of the inner wall of the hollow shaft (11).

2. The electromotive adjustable drive as defined in Claim 1, **characterized in that** the spindle pitch (27) and the spindle diameter (26) are adapted one to the other, with the spindle pitch (27) lying within a range of between 0.15 x spindle diameter (26) and 0.30 x spindle diameter (26).

3. The electromotive adjustable drive as defined in any of the preceding claims, **characterized in that** the threaded element (24) is configured as a spindle nut.

4. The electromotive adjustable drive as defined in any of Claims 1 to 2, **characterized in that** the thread of the threaded element (24) is integrated in the hollow shaft (11).

5. The electromotive adjustable drive as defined in any of the preceding claims, **characterized in that** the spindle diameter (26) lies within a range of between 5 and 15 mm and is preferably fixed at a value of at least approximately 10 mm.

6. The electromotive adjustable drive as defined in any of the preceding claims, **characterized in that** the spindle pitch (27) lies within a range of between 2 and 3 mm and is preferably fixed at a value of at least approximately 2.2 mm.

7. The electromotive adjustable drive as defined in any of the preceding claims, **characterized in that** the spindle (10) preferably comprises a single-flight trapezoidal thread.

8. The electromotive adjustable drive as defined in any of the preceding claims, **characterized in that** the spindle (10) is made from steel and the threaded element (24) is made from a plastic material.

9. The electromotive adjustable drive as defined in any of the preceding claims, **characterized in that** a position sensor and/or a directional sensor and/or a speed sensor (23a, 23b) is provided and is preferably arranged in the electric motor (12).

10. The electromotive adjustable drive as defined in any of the preceding claims, **characterized in that** the threaded element (24) can be connected with the rotor (18) of the electric motor (12) via a gearing (25a, 25b).

11. The electromotive adjustable drive as defined in any of the preceding claims, **characterized in that** the electric motor (12) is a commutator motor.

12. The electromotive adjustable drive as defined in any of the preceding claims, **characterized in that** the housing (13) of the electric motor (12) comprises at least one flattened housing portion (30a, 30b).

## Revendications

1. Mécanisme de réglage à moteur électrique, dans lequel le rotor (18) d'un moteur électrique (12) est assemblé par complémentarité de force avec un arbre creux (11) et avec une partie filetée (24) qui s'engage dans une broche (10) pour transformer une rotation du rotor (18) en un mouvement de va-et-vient de la broche (10), l'arbre creux (11) présentant un diamètre intérieur (28) au moins approximativement constant, et le diamètre intérieur (28) de l'arbre creux et le diamètre (26) de la broche étant adaptés l'un à l'autre de sorte que la broche (10) est montée et guidée dans l'arbre creux (11),
**caractérisé en ce qu'**
au moins un élément amortisseur (11a) est monté sur au moins une partie de la paroi intérieure de l'arbre creux (11).

2. Mécanisme de réglage à moteur électrique selon la revendication 1,
**caractérisé en ce que**
le pas (27) de la broche et le diamètre (26) de la broche sont adaptés l'un à l'autre, le pas (27) de la broche se situant dans une plage allant de 0,15 fois le diamètre (26) de la broche à 0,30 fois le diamètre (26) de la broche.

3. Mécanisme de réglage à moteur électrique selon l'une quelconque des revendications précédentes,
**caractérisé en ce que**
la partie filetée (24) constitue un écrou de broche.

4. Mécanisme de réglage à moteur électrique selon l'une quelconque des revendications 1 à 2,
**caractérisé en ce que**
le filetage de la partie filetée (24) est intégré dans l'arbre creux (11).

5. Mécanisme de réglage à moteur électrique selon l'une quelconque des revendications précédentes,
**caractérisé en ce que**
le diamètre (26) de la broche se situe dans une plage allant de 5 à 15 mm et est de préférence fixé, au moins approximativement, à 10 mm.

6. Mécanisme de réglage à moteur électrique selon l'une quelconque des revendications précédentes,
**caractérisé en ce que**
le pas (27) de la broche se situe dans une plage allant de 2 à 3 mm et est de préférence fixé, au moins approximativement, à 2,2 mm.

7. Mécanisme de réglage à moteur électrique selon l'une quelconque des revendications précédentes,
**caractérisé en ce que**
la broche (10) présente un filet trapézoïdal de préférence unique.

8. Mécanisme de réglage à moteur électrique selon l'une quelconque des revendications précédentes,
**caractérisé en ce que**
la broche (10) est réalisée en acier et la partie filetée (24) en matière plastique.

9. Mécanisme de réglage à moteur électrique selon l'une quelconque des revendications précédentes,
**caractérisé en ce qu'**
un capteur de position et/ou de sens de rotation et/ou de vitesse de rotation (23a, 23b) est prévu de préférence dans le moteur électrique (12).

10. Mécanisme de réglage à moteur électrique selon l'une quelconque des revendications précédentes,
**caractérisé en ce que**
la partie filetée (24) peut être assemblée au rotor (18) du moteur électrique (12) via un engrenage (25a, 25b).

11. Mécanisme de réglage à moteur électrique selon l'une quelconque des revendications précédentes,
**caractérisé en ce que**
le moteur électrique (12) est un moteur à collecteur.

12. Mécanisme de réglage à moteur électrique selon l'une quelconque des revendications précédentes,
**caractérisé en ce qu'**
un boîtier (13) du moteur électrique (12) présente au moins un méplat (30a, 30b).
